# EUROPÄISCHE PATENTANMELDUNG

(11) **EP 1 530 111 A2**
(43) Veröffentlichungstag der Anmeldung: **11.05.2005**
(21) Anmeldenummer: 04026156.2
(22) Anmeldetag: 04.11.2004
(51) Int. Cl.: G05D 23/02

(54) **Ausdehnungselement und Heizkörperthermostatventil**

(30) Priorität: 07.11.2003 DE 10352452; 13.11.2003 DE 10352972
(71) Anmelder: Honeywell Technologies Sarl ECC, 1110 Morges (CH)
(72) Erfinder: Kottek, Günter, 44534 Lünen (DE)
(74) Vertreter: Graefe, Jörg

(57) **Zusammenfassung**

Ausdehnungselement insbesondere für Heizkörperthermostatventile mit einer Kapsel (1), in welcher ein unter Wärmeeinfluss sich ausdehnendes Mittel (2) enthalten ist, wobei zumindest ein Bereich einer ersten Außenwand (3) der Kapsel (1) sich unter dem Druck des sich bei Wärmeeinfluss ausdehnenden Mittels (2) in zumindest eine erste Richtung (5) relativ zu einer zweiten Außenwand (4) verschiebbar ist.

## Beschreibung

Die vorliegende Erfindung betrifft ein Ausdehnungselement insbesondere für Heizungsthermostatventile und ein Heizungsthermostatventil mit einem solchen Ausdehnungselement.

Ausdehnungselemente für Heizungsthermostatventile sind aus dem Stand der Technik bekannt. Die Ausdehnungselemente weisen dabei entweder Dehnstoffelemente auf oder sind als flüssigkeitsgefüllte Ausdehnungselemente ausgeführt. Die Ausdehnungselemente, die aus dem Stand der Technik bekannt sind, weisen eine zylindrische Kapsel auf, bei welcher von einer Bohrung in einer ersten Außenseite, es handelt sich dabei zumeist um eine Stirnseite, ausgehend nach Innen eine Membran integriert ist. In diese Membran ist ein Stößel eingesetzt, der durch die Bohrung geführt ist. Bei einer Ausdehnung des Dehnstoffs bzw. der Flüssigkeit in der Kapsel wird die Membran zusammengepresst, wodurch der Stößel aus der Kapsel herausgedrückt wird. Die Ausdehnung des Dehnstoffs bzw. der Flüssigkeit wirkt vollständig auf die Membran bzw. den Stößel, da die Kapsel ansonsten starr und nicht elastisch ist. Neben der Kapsel, der Membran und dem Stößel umfasst ein aus dem Stand der Technik bekanntes Ausdehnungselement in der Anwendung eine als Überhubfeder bezeichnete Feder. Diese Überhubfeder dient dazu, den von dem Stößel bei einer Ausdehnung des Dehnstoffs bzw. der Flüssigkeit in der Kapsel gemachten Hubs bei einem vollständig geschlossenen Heizkörperthermostatventil aufzunehmen, der sonst zu einer Beschädigung oder gar Zerstörung des Ausdehnungselements führen könnte.

Die bekannten Ausdehnungselemente weisen somit eine Vielzahl von Teilen auf, die zum Teil aus verschiedenen Materialien hergestellt sind. Da ist zum Einen die mit dem sich ausdehnenden Stoff gefüllte metallische Kapsel, zum Anderen die Membran aus einem Metall bzw.

Elastomer, der Stößel und die Überhubfeder. Die so aufgebauten Ausdehnungselemente sind daher in der Anwendung aufwändig.

Der Erfindung liegt daher die Aufgabe zu Grunde, ein Ausdehnungselement zu entwickeln, welches weniger komplex in der Anwendung ist als die bekannten Ausdehnungselemente und daher kostengünstiger herstellbar sind.

Die Aufgabe wird erfindungsgemäß dadurch gelöst, dass zumindest ein Bereich einer ersten Außenwand der Kapsel sich unter dem Druck des sich bei Wärmeeinfluss ausdehnenden Mittels in zumindest eine erste Richtung relativ zu einer gegenüberliegenden zweiten Außenwand verschiebt. Bei einem erfindungsgemäßen Ausdehnungselement verschiebt sich an Stelle des von den bisher bekannten Ausdehnungselementen bekannten Stößels die erste Außenwand bzw. ein Bereich der ersten Außenwand. Die sich verschiebende erste Außenwand bzw. der sich verschiebende Bereich der ersten Außenwand kann, sofern das Ausdehnungselement in einem Heizkörperthermostatventil eingesetzt ist, auf die Ventilspindel des Heizkörperthermostatventils einwirken. Ein Stößel und eine Membran, welche auf den Stößel bei einer Ausdehnung in der Kapsel des Ausdehnungselements einwirkt, ist somit nicht mehr notwendig.

Damit das erfindungsgemäße Ausdehnungselement möglichst kompatibel zu dem bisher bekannten Thermostatventilen ist, weist die erste Außenwand einen Ansatz nach Art eines Stößels auf. Dabei kann der Ansatz durch eine Materialverdickung der ersten Außenwand gebildet sein und/oder aber der Ansatz wird durch eine Ausstülpung der Außenwand gebildet. Die erste Außenwand kann so gestaltet sein, dass die gesamte erste Außenwand mit dem Ansatz auf Grund der Wärmeausdehnung des Stoffes in der Kapsel verschoben wird.

Ebenso ist es möglich, dass nur der Bereich der ersten Außenwand verschoben wird, in welchem der Ansatz ausbildet ist.

Sofern der Ansatz durch eine Ausstülpung der ersten Außenwand gebildet ist, kann die erste Außenwand insbesondere im Bereich der Ausstülpung teilweise nach Art eines Faltenbalgs ausgebildet sein. Dadurch wird die Ausdehnung der ersten Außenwand auf Grund der Wärmeausdehnung des Stoffes in der Kapsel erleichtert.

Gemäß der Erfindung kann die erste Außenwand oder der Bereich der ersten Außenwand zumindest teilweise aus einem Kunststoff bestehen. Dieser Kunststoff ist dann vorteilhaft elastisch verformbar unter Einwirkung der Kräfte, die bei der Wärmeausdehnung auf die erste Außenwand wirken. Die erste Außenwand oder der Bereich der ersten Außenwand kann ein zwei- oder mehrlagiges Kompoundmaterial sein, wobei eine erste Lage aus einem elastischen Kunststoff besteht, der der ersten Außenwand der dem Bereich der ersten Außenwand die notwendige mechanische Stabilität gibt. Die zweite Lage kann der Außenwand oder ihrem Bereich die notwendige Diffusionsdichtigkeit geben.

Die Kapsel des Ausdehnungselements kann gemäß der Erfindung einen die zweite Außenwand umfassenden Topf und einen die erste Außenwand umfassenden Deckel haben. Während der Deckel vorteilhaft aus dem bereits erwähnten elastischen Kunststoff hergestellt ist, ist es vorteilhaft, wenn die Außenwände des Topfes eine deutlich geringere Elastizität als die erste Außenwand oder der gesamte Deckel haben. Die Außenwände des Topfes können dabei beispielsweise aus Metall bestehen. Dadurch, dass die Außenwände des Topfes aus einem deutlich weniger elastisch verformbaren Material als der Deckel oder zumindest die erste Außenwand oder zumindest der Bereich der ersten Außenwand hergestellt sind, ist gewährleistet, dass die auf Grund der Wärmeausdehnung des in der Kapsel eingelagerten Stoffes entstehenden Kräfte im Wesentlichen zu einer Verformung der ersten Außenwand oder eines Bereichs der ersten Außenwand beitragen und weniger oder gar nicht zu einer Verformung des Topfes führen.

Damit bei dem Einsatz des erfindungsgemäßen Ausdehnungselementes in einem Heizkörperthermostatventil bei einem vollständig geschlossenen Ventil eine weitere Ausdehnung des Stoffes in dem Ausdehnungselement nicht zu einer Beschädigung oder Zerstörung des Ausdehnungselements oder des übrigen Heizkörperthermostatventils führt, kann gemäß der Erfindung dadurch Sorge getragen werden, dass die bei einem geschlossenen Heizkörperthermostatventil in dem Ausdehnungselement entstehenden Kräfte zu einer Verformung des Deckels des Ausdehnungselements in zumindest eine zweite Richtung führen. Diese zweite Richtung kann senkrecht zur ersten Richtung sein. Ebenso ist es möglich, dass die zweite Richtung parallel zur ersten Richtung ist, wenn der Deckel an einer anderen Stelle verformt wird.

Ein Ausführungsbeispiel für ein erfindungsgemäßes Ausdehnungselement ist anhand der Zeichnung näher beschrieben. Darin zeigt
- Fig. 1: einen Längsschnitt durch das erfindungsgemäße Ausdehnungselement,
- Fig. 2: einen Schnitt durch das erfindungsgemäße Ausdehnungselement gemäß Linie II-II in Fig. 1 und
- Fig. 3: einen Längsschnitt durch ein Heizkörperthermostatventil mit dem erfindungsgemäßen Ausdehnungselement.

Das erfindungsgemäße Ausdehnungselement weist eine Kapsel 1 auf, die einen metallischen Topf 9 und einen aus einem elastischen Kunststoff hergestellten Deckel 8 aufweist. Der Topf 9 und der Deckel 8 sind fest miteinander verbunden. In der aus dem Topf 9 und dem Deckel 8 gebildeten Kapsel 1 ist ein Stoff 2 eingelagert, der sich unter Wärmeeinwirkung ausdehnt.

Der Topf 9 ist im Wesentlichen zylindrisch ausgebildet und weist auf einer Stirnseite eine kreisförmige Außenwand 4 auf, die im Weiteren als zweite Außenwand 4 bezeichnet ist. Daran schließt sich eine Außenwand 10 an, welche die Mantelfläche des Topfes 9 bildet. Die zweite Stirnseite des Topfes hat eine Öffnung, wobei in die Öffnung des Topfes 9 der Deckel 10 eingesetzt ist.

Der Deckel 8 weist einen ringförmigen Abschnitt 12 auf, an den sich ein zylindrischer Abschnitt 11 stutzenartig anschließt. Dieser stutzenartige Abschnitt 11, der wie der ringförmige Abschnitt 12 eine Außenwand der Kapsel 1 bildet, wird durch eine erste Außenwand 3 der Kapsel 1 verschlossen. Diese erste Außenwand 3 der Kapsel ist nach Art eines Faltenbalgs gefaltet, wobei die Falte ringförmig verläuft. Die erste Außenwand 3 umfasst einen aus einer Materialverdickung der ersten Außenwand 3 hergestellten Ansatz 7, der nach Art eines Stößels nach außen ragt. Zur Fixierung und zum Zentrieren des Ansatzes 7 an einer Ventilspindel ist an dem freien Ende des Ansatzes 7 eine Kehle 14 vorgesehen.

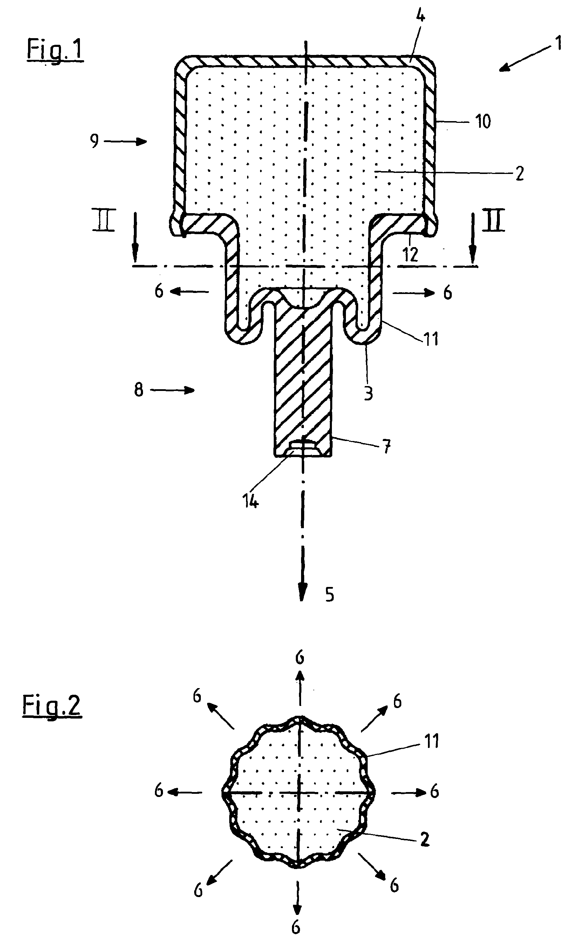

Wie aus der Querschnittsdarstellung der Fig. 2 erkennbar ist, ist der stutzenartige Abschnitt des Deckels mit seiner Außenwand 11 ebenfalls gefaltet. Diese Faltung wie auch die Faltung der ersten Außenwand 3 der Kapsel 1 dienen dazu, die Volumenausdehnung des Stoffes 2 bei Wärmeeinfluss auszugleichen. Bei einer Volumenausdehnung des Stoffes 2 auf Grund eines Wärmeeinflusses passiert folgendes:

Zunächst wird die erste Außenwand 3 durch die auf Grund des Wärmeeinflusses auf den Stoff 2 entstehenden Kräfte nach außen, das heißt in eine erste Richtung 5 gedrückt. Der Ansatz 7 nach Art eines Stößels bewegt sich dadurch von der zweiten Außenwand 4 der Kapsel 1 weg. Kann der Ansatz 7 jedoch nicht weiter bewegt werden, da ein entsprechender Widerstand einer weiteren Bewegung des Ansatzes 7 im Wege steht, kann die weitere Volumenausdehnung des Stoffes 2 bei Wärmeeinfluss durch eine Verschiebung der Außenwand 11 der Kapsel ausgeglichen werden. Der Durchmesser des stutzenartigen Abschnitts 11 des Deckels 8 vergrößert sich, um das Ausdehnungsvolumen aufzunehmen.

Durch eine entsprechende Ausgestaltung der ersten Außenwand 3 und der Außenwand 11 kann erreicht werden, dass die Volumenausdehnung zunächst in eine Bewegung des Ansatzes 7 in der ersten Richtung 5 erfolgt, bevor dann, nachdem eine Bewegung in der ersten Richtung 5 unmöglich ist, eine Bewegung der Außenwand 11 in radialer Richtung, das heißt in die zweiten Richtungen 6 erfolgt. Die Volumenausdehnung in die zweiten Richtungen 6, die die bei einer Verhinderung einer weiteren Bewegung des Ansatzes 7 die von dem Stoff 2 erzeugten Kräfte umsetzt, hat die gleiche Wirkung, wie bei einer aus dem Stand der Technik bekannten Anwendung eines Ausdehnungselements vorgesehene Überhubfeder. Das erfindungsgemäße Ausdehnungselement umfasst in einem Teil somit was die aus dem Stand der Technik bekannten Anwendungen von Ausdehnungselementen mit einer Dehnstoffkapsel, einem Stößel und einer Überhubfeder umfassen. Die Herstellung des erfindungsgemäßen Ausdehnungselements ist einfacher und kostengünstiger.

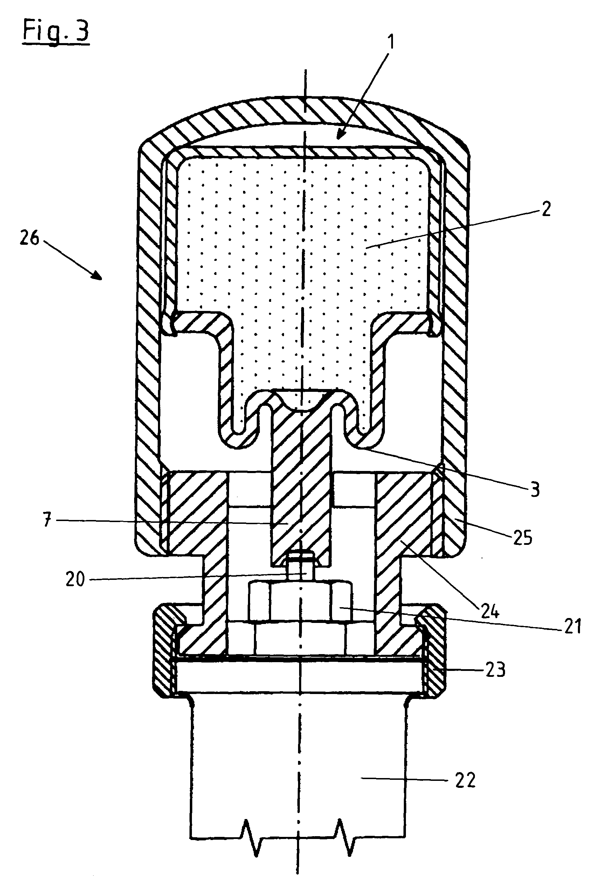

Der in der Fig. 3 dargestellte obere Teil eines Heizkörperthermostatventils zeigt das obere Ende eines Stutzens 22 eines Ventilgehäuses, an den ein Regelaufsatz 26 angeschlossen ist. Der Stutzen 22 weist dazu ein Außengewinde auf, an welchem der Regelaufsatz 26 mit einer Überwurfmutter 23 befestigt ist. Die Überwurfmutter 23 fixiert dabei einen Sockel 24 des Regelaufsatzes. Dieser Sockel weist eine zentrale Bohrung auf, in welchen das obere Ende 22 einer Ventilspindel 20 hineinragt, wobei die Ventilspindel 22 durch eine Sechskantmutter 21 umgriffen ist.

Der Regelaufsatz 26 weist ferner einen topfartigen Griff 25 auf. Dieser Griff 25 weist ein Innengewinde auf, mit welchem der Griff auf ein Außengewinde des Sockels 24 aufgeschraubt ist. Durch ein Verdrehen des Griffs gegenüber dem Sockel kann der Abstand des Griffs zum Sockel verändert werden.

In dem Griff 25 ist das erfindungsgemäße Ausdehnungselement mit seiner Kapsel 1 und den darin eingelagerten Stoff 2 eingesetzt. Der stößelartige Ansatz 7 sitzt mit der Kehle 14 auf dem oberen Ende der Ventilspindel 20 auf. Durch eine Ausdehnung des Stoffs 2 in der Kapsel 1 wird, wie bereits zuvor beschrieben, der Ansatz 7 in die erste Richtung 5 gedrückt, wobei der Ansatz 7 auf die Ventilspindel 20 einwirkt, um so den Durchfluss durch das Heizkörperthermostatventil zu steuern. Ist das Heizkörperthermostatventil geschlossen, das heißt der am nicht dargestellten unteren Ende der Ventilspindel sitzende Ventilkegel sitzt auf dem ebenfalls nicht dargestellten Ventilsitz des Heizkörperthermostatventils auf, kann bei einer weiteren Erwärmung des Stoffes 2 in der Kapsel 1 eine Ausdehnung in die zweite Richtung erfolgen, welches einer Kompression der aus dem Stand der Technik bekannten Überhubfedern entspricht. Durch ein Verdrehen des Griffs 25 gegenüber dem Sockel 24 kann die Temperatur festgelegt werden, bei welchem das Heizungsthermostatventil öffnet bzw. schließt, wie dies auch von anderen Heizungsthermostatventilen bekannt ist.

## Patentansprüche

1. Ausdehnungselement insbesondere für Heizkörperthermostatventile mit einer Kapsel (1), in welcher ein unter Wärmeeinfluss sich ausdehnendes Mittel (2) enthalten ist, **dadurch gekennzeichnet, dass** zumindest ein Bereich einer ersten Außenwand (3) der Kapsel (1) sich unter dem Druck des sich bei Wärmeeinfluss ausdehnenden Mittels (2) in zumindest eine erste Richtung (5) relativ zu einer zweiten Außenwand (4) verschiebt.

2. Ausdehnungselement nach Anspruch 1, **dadurch gekennzeichnet, dass** das die erste Außenwand (3) einen Ansatz (7) nach Art eines Stößels hat.

3. Ausdehnungselement nach Anspruch 2, **dadurch gekennzeichnet, dass** der Ansatz (7) eine Materialverdickung der ersten Außenwand ist.

4. Ausdehnungselement nach Anspruch 2, **dadurch gekennzeichnet, dass** der Ansatz durch eine Ausstülpung der ersten Außenwand (3) gebildet ist.

5. Ausdehnungselement nach einem der Ansprüche 1 bis 4, **dadurch gekennzeichnet, dass** die erste Außenwand (3) teilweise nach Art eines Faltenbalgs ausgebildet ist.

6. Ausdehnungselement nach Anspruch 5, **dadurch gekennzeichnet, dass** die erste Außenwand (3) im Bereich der Ausstülpung (7) nach Art eines Faltenbalgs ausgebildet ist.

7. Ausdehnungselement nach einem der vorhergehenden Ansprüche, **dadurch gekennzeichnet, dass** die erste Außenwand (3) oder der Bereich der ersten Außenwand (3) aus einem Kunststoff besteht.

8. Ausdehnungselement nach dem vorhergehenden Anspruch, **dadurch gekennzeichnet, dass** der Kunststoff elastisch verformbar ist.

9. Ausdehnungselement nach einem der vorhergehenden Ansprüche, **dadurch gekennzeichnet, dass** die Kapsel (1) einen die zweite Außenwand (4) umfassenden Topf (9) und einen die erste Außenwand (3) umfassenden Deckel (8) umfasst.

10. Ausdehnungselement nach Anspruch 9, **dadurch gekennzeichnet, dass** die Außenwände (4, 10) des Topfes (9) eine deutlich geringere Elastizität als die erste Außenwand (3) haben.

11. Ausdehnungselement nach dem vorhergehenden Anspruch, **dadurch gekennzeichnet, dass** die Außenwände (4, 10) des Topfes (9) aus Metall bestehen.

12. Ausdehnungselement nach einem der Ansprüche 9 bis 11, **dadurch gekennzeichnet, dass** der Deckel (8) in zumindest Bereichen der Außenwände (3, 11) sich unter dem Druck des sich bei Wärmeeinfluss ausdehnenden Mittels in zumindest eine zweite Richtung (6) ausdehnt.

13. Heizkörperthermostatventil mit einem Ventilgehäuse, einer Ventilspindel und einem Ausdehnungselement, **dadurch gekennzeichnet, dass** das Ausdehnungselement nach einem der Ansprüche 1 bis 11 ausgebildet ist.

14. Heizkörperthermostatventil nach Anspruch 13, **dadurch gekennzeichnet, dass** der Ansatz (7) in Wirkverbindung mit der Ventilspindel steht.
